# EUROPÄISCHE PATENTSCHRIFT

(11) **EP 1 061 143 B1**
(45) Veröffentlichungstag und Bekanntmachung des Hinweises auf die Patenterteilung: **25.08.2004**
(21) Anmeldenummer: 00111132.7
(22) Anmeldetag: 24.05.2000
(51) Int. Cl.: C22B 11/00, C22B 3/00

(54) **Verfahren zum Lösen von Edelmetallen aus edelmetallhaltigen Scheidgütern**
Method for solubilizing noble metalls
Methode de solubilisation de métaux precieux

(30) Priorität: 18.06.1999 DE 19928029
(43) Veröffentlichungstag der Anmeldung: 20.12.2000
(73) Patentinhaber: W.C. Heraeus GmbH & Co. KG, 63450 Hanau (DE)
(72) Erfinder: Stettner, Martin, 63674 Altenstadt (DE); Meyer, Horst, Dr., 63674 Altenstadt (DE); Grehl, Matthias, Dr., 60388 Frankfurt (DE)
(74) Vertreter: Kühn, Hans-Christian

(56) Entgegenhaltungen:
- DATABASE WPI Section Ch, Week 199739 Derwent Publications Ltd., London, GB; Class M25, AN 1997-416628 XP002147121 & CN 1 114 361 A (SHENHUA INST METAL MATERIALS SHAANXI), 3. Januar 1996 (1996-01-03)
- DATABASE WPI Section Ch, Week 199744 Derwent Publications Ltd., London, GB; Class E32, AN 1997-471733 XP002147336 & CN 1 119 678 A (SHENHUA METAL MATERIAL INST SHAANXI), 3. April 1996 (1996-04-03)
- PATENT ABSTRACTS OF JAPAN vol. 007, no. 011 (C-145), 18. Januar 1983 (1983-01-18) & JP 57 169027 A (TOYOTA JIDOSHA KOGYO KK), 18. Oktober 1982 (1982-10-18)
- PATENT ABSTRACTS OF JAPAN vol. 003, no. 072 (C-049), 21. Juni 1979 (1979-06-21) & JP 54 046120 A (OSAKA GAS CO LTD), 11. April 1979 (1979-04-11)
- DATABASE WPI Section Ch, Week 199346 Derwent Publications Ltd., London, GB; Class J04, AN 1993-360330 XP002147337 & CN 1 067 925 A (KUNMING INST NOBLE METALS CHINESE NON), 13. Januar 1993 (1993-01-13)

## Beschreibung

Die Erfindung betrifft ein Verfahren zum Lösen von Edelmetallen aus edelmetallhaltigen Scheidgütem.

Aus dem Stand der Technik ist eine Reihe von Verfahren zum Lösen von Edelmetallen aus Scheidgütern bekannt. In diesem Zusammenhang sei auf das Einblasen von elementarem Chlor in eine stark salzsaure Lösung, das Lösen mit Königswasser, das elektrolytische Auflösen von metallischen Scheidgütem und auf das Schmelzen mit Natriumchlorid/Chlor hingewiesen.

Nachteilig an den oben genannten Verfahren ist u. a. die Verwendung des relativ teuren Chlorgases, das relativ zeitaufwendige Einleiten des Chlorgases in die entsprechenden Lösungen/Suspensionen, die hohe Abluftbelastung der nachgeschalteten Wäscher durch NOₓ sowie die nicht immer unproblematische Arbeitssicherheit.

Aus dem vorgenannten ergibt sich das Problem, mit Hilfe eines neuartigen Verfahrens die oben genannten Nachteile zumindest teilweise zu beseitigen. Das sich ergebende Problem liegt insbesondere darin, das Chlorgas durch eine leicht handhabbare und kostengünstigere Chlorquelle zu ersetzen, die darüber hinaus erheblich schneller in die entsprechenden Lösungen/Suspensionen eingebracht werden kann, sowie der Ersatz von Königswasser und die damit erhebliche Reduzierung der Abluftbelastung der Wäscher durch NOₓ.

Dieses Problem wird erfindungsgemäß durch ein Verfahren nach Anspruch 1 gelöst.

Beim erfindungsgemäßen Verfahren wird bei Vorlage von Edelmetalloxiden eine Reduktion zu den einzelnen Metallen in feinverteilter Form durchgeführt. Es ist bekannt, daß sich Edelmetalloxide nicht direkt mit Salzsäure/Oxidationsmittel lösen lassen. Daher werden die Oxide zunächst mit einem Reduktionsmittel in alkalischer Suspension zum Edelmetall reduziert, welche sich dann in Salzsäure plus Oxidationsmittel lösen.

Grundsätzlich werden die Scheidgüter und/oder die Edelmetalle mit HCl und Chlorat oxidativ versetzt, wobei die entstehende Lösung/Suspension eine Konzentration an H⁺-Ionen von mindestens 1 mol/l, eine Konzentration an Cl⁻-lonen von mindestens 1 mol/l und eine Temperatur von mindestens+ 50 °C aufweist.

Ein bekanntes Verfahren ist das Lösen von Edelmetallen in Salzsäure/Chlor. In salzsaurer Lösung läßt sich Chlor durch die Umsetzung von Chlorat mit Salzsäure bilden, welches die Edelmetalle dann oxidiert. Eine H⁺-Ionenkonzentration von 1 mol/l und eine Mindesttemperatur von + 50 °C sind jedoch notwendig, damit das Chlorat chemisch abreagiert.

Als Chloratquelle kann beispielsweise Kalium- oder Natriumchlorat verwendet werden.

Es ist von Vorteil, daß die Temperatur der entstehenden Lösung/Suspension maximal + 95 °C beträgt, da oberhalb von + 95 °C explosives ClO₂ (Chlordioxid) entstehen kann.

Weiterhin ist es vorteilhaft, daß die entstehende Lösung/Suspension mindestens 3 mol/l H⁺-Ionen aufweist, da hierdurch die Edelmetalle rasch und nahezu vollständig gelöst werden.

Darüber hinaus ist es von Vorteil, wenn die Oxidation potentialgesteuert durchgeführt wird, da auf diese Art und Weise das Ende der Oxidation relativ leicht zu erkennen und somit eine gezielte Verfahrenssteuerung möglich ist.

Weiterhin ist es von Vorteil, wenn bei Vorlage von Edelmetalloxiden die Reduktion mittels Ameisensäure oder Hydrazin durchgeführt wird, da sich diese Reduktionsmittel in der Praxis bewährt haben. Die Edelmetalloxide werden in alkalischer Lösung, insbesondere in Natronlauge, suspendiert und bei erhöhter Temperatur mit dem Reduktionsmittel versetzt. Es wird Ameisensäure verwendet, wenn Edelmetalloxide zusammen mit Edelmetallen vorliegen, Hydrazin bei rein oxidischen Materialien.

Wird die Reduktion mittels Hydrazin durchgeführt, so ist es von Vorteil, wenn die Edelmetalle hydrazin-frei gewaschen werden, um die nachfolgende Oxidation nicht nachhaltig zu stören.

Die nachfolgenden Ausführungen sind besonders vorteilhaft, da sich diese in der Praxis bewährt haben:

Das edelmetallhaltige Scheidgut und/oder die Edelmetalle werden vor dem oxidativen Versetzen mit HCl und Clorat in 3 bis 5 molarer Salzsäure suspendiert. Die Suspension/Lösung des edelmetallhaltigen Scheidguts und/oder der Edelmetalle wird vor der Chloratzugabe auf + 70° C bis + 80° C erwärmt. Das Chlorat wird als wäßrige 4,5 bis 5,0 molare Chloratlösung zugesetzt.

Die nachfolgenden Beispiele dienen zur Erläuterung der Erfindung.

### 1. Lösen von Erzkonzentrat

### 1.1 Einsatzmaterial

- Konzentratsuspension nach Hydrazin-Reduktion, gewaschen
- Salzsäure, konz., techn.
- Natriumchloratlösung, techn. 5 mol/l

### 1.2 Versuchsdurchführung und Beobachtungen

### Verwendete Apparatur

Die verwendete Apparatur bestand aus einem 2 l Reaktionsgefäß, Rührmotor, Glasrührer, Stabthermometer, Pilzheizhaube und pH- und Redox-Einstabmeßkette (Pt//Ag/AgCl). Durch die Apparatur wurde mit Hilfe einer Wasserstrahlpumpe ein leichter Luftstrom geleitet. Dieser wurde im Anschluß durch eine Waschflasche mit 100 ml 10 n HCl gesaugt.

### HCl/Chlorat-Auszug

In dem Versuchsreaktor wurden 866,55 g vorreduzierte Erzkonzentratsuspension und 700 ml konz. Salzsäure vorgelegt. Anschließend wurde auf eine Temperatur von 75 °C aufgeheizt. Die Temperatur wurde gehalten und mit Hilfe einer Schlauchpumpe langsam Natriumchloratlösung zugegeben. Nach einer Zugabemenge von 55 ml Natriumchloratlösung innerhalb von 35 Minuten war das Redoxpotential von einem Anfangswert von 350 mV auf 1020 mV vs. Pt//Ag/AgCl angestiegen. Gleichzeitig war eine deutliche Chlorgasentwicklung zu beobachten. Anschließend wurde noch 30 Minuten bei 75 °C gerührt und die Lösung stehengelassen, bis sie sich auf 40 °C abgekühlt hatte. Nun wurde über einen Schwarzbandfilter abgenutscht und der Rückstand mit voll entsalztem Wasser (VEW) portionsweise gewaschen, bis das ablaufende Filtrat klar war. Das Filtrat und das Waschwasser wurden vereinigt (2570 ml) und zur DCP-Analyse gegeben. Der Rückstand wurde im Vakuumtrockenschrank 8 Stunden bei 100 °C getrocknet (10,04 g) und eine DCP-Analyse veranlaßt. Der Inhalt der Waschflasche war farblos und wurde daher nicht weiter analysiert.

Es wurden hierbei folgende Aufschlußraten ermittelt:

| | |
|---|---|
| Ru | 98,0 % |
| Au | > 97,8 % |
| Pd | 99,7 % |
| Pt | 99,8 % |
| Ir | 95,8 % |
| Rh | 90,0 % |

Die Edelmetalle Ru, Au, Pd, Pt konnten in sehr guter Ausbeute mobilisiert werden (98 - 99 %), wobei kein Ruthen abdestilliert wurde. Iridium konnte zu 95,8 % gelöst werden, Rhodium nur zu 90 %. Das Rhodium wird bei dem vergleichbaren HCl/Cl₂-Löseprozeß ebenfalls nicht vollständig aktiviert. Das Silber befindet sich erwartungsgemäß zu 97 % im unlöslichen Rückstand.

### 2. Lösen von Pd-Aschen

### 2.1 Einsatzmaterial

- Pd/Pt-Asche (abgebrannter Kohleträgerkatalysator, ca. 50 - 100 kg Edelmetallinhalt)
- Ameisensäure, 85 %, technisch
- Salzsäure konzentriert, technisch
- Stadtwasser
- Natriumchloratlösung, 4,5 mol/l, technisch.

### 2.2 Ameisensäurereduktion und Chlorataufschluß

In dem Reaktionskessel wurden ca. 1000 l Stadtwasser vorgelegt und das Rührwerk eingeschaltet. Anschließend wurden die Pd/Pt-Aschen in den Kessel gegeben und eingerührt. Nach der Zugabe von 20 - 80 l konz. Natronlauge (Natronlaugemenge entspricht der Ameisensäuremenge) konnte die Suspension auf eine Temperatur von 70 °C (+/- 2 °C) unter Rühren aufgeheizt werden.

Die Heizung wurde nun abgeschaltet. Die Suspension reagierte alkalisch (pH = 14). Innerhalb von 60 Minuten wurden nun je nach Palladiummenge 5 - 801 Ameisensäure in den Reaktor gegeben. Während der Ameisensäurezugabe schäumte der Kesselinhalt nur leicht und jederzeit kontrollierbar.

Der pH-Wert der Lösung wurde fortlaufend kontrolliert. Bei einem Absinken auf pH = 12 wurde konz. Natronlauge in 10 l Portionen nachgegeben. Die Temperatur der Reaktionsmischung stieg während der Ameisensäurezugabe. Nachdem die gesamte Menge Ameisensäure zugesetzt war, wurde noch eine halbe Stunde nachgerührt. Während der Reduktion hatte sich die Farbe der Suspension von braun-schwarz nach schwarz verändert.

Nun wurden ca. 1000 l konz. Salzsäure zu der Suspension gegeben. Die ersten 300 l Salzsäure mußten sehr langsam zugegeben werden (ca. 45 Minuten), da die Lösung zum Schäumen neigte. Der Schaum war aber jederzeit durch Nachregulierung der Zugabegeschwindigkeit der Salzsäure kontrollierbar. Die restlichen 700 l Salzsäure konnten dann schneller zugegeben werden. Anschließend wurde eine Temperatur von 70 °C (+/- 2 °C) eingestellt. Nach Erreichen der Temperatur wurde die Suspension nicht mehr geheizt. Das Redoxpotential der Lösung wurde gemessen und zu 0 mV vs. Pt//Ag/AgCl bestimmt. Anschließend wurde Natriumchloratlösung mit der ALMATEC-Pumpe aus einem Vorratsgefäß in den Reaktor gepumpt. Die Dosiergeschwindigkeit ist hierbei so eingestellt worden, daß die gesamte Menge der benötigten Chloratlösung innerhalb von zwei Stunden zugegeben war. Die maximale Dosiergeschwindigkeit sollte am Ende der Reaktion 40 l Chloratlösung pro Stunde nicht überschreiten, am Anfang konnte schneller dosiert werden, da die Reaktionsmischung ohne Chlorgasentwicklung das Chlorat aufgenommen hatte.

Während der gesamten Zeit der Chloratzugabe stand der Kessel unter Beobachtung. Die Temperatur der Suspension wurde fortlaufend kontrolliert. Es war eine deutliche Temperatursteigerung zu beobachten.

Eine Schaumbildung in Verbindung mit Chlorgasentwicklung zeigte das Ende der Reaktion an. In diesem Fall wurde die Chloratzugabe sofort beendet. Nach der Zugabe der Natriumchloratlösung wurde das Redoxpotential der Suspension gemessen. Es war auf einen Wert von 980 mV vs. Pt//Ag/AgCl angestiegen. Nach der Beendigung der Chloratzugabe wurde die verwendete Pumpe nur bei geringer Dosierungsgeschwindigkeit (ca. 40 l/h) mit Wasser gespült, bis die restliche Natriumchloratlösung aus den Schläuchen verdrängt war.

Nach beendeter Chloratzugabe wurde die Suspension unter Rühren noch eine Stunde bei 80 - 90 °C gehalten. Nun wurde die Suspension weitergerührt, bis sie sich auf 60 °C (+/- 5 °C) abgekühlt hatte. Die Suspension wurde stehen gelassen und soweit wie möglich abgehebert.

Der Aufschlußrückstand wurde über eine Filterpresse filtriert und so gut wie möglich gewaschen. Das Filtrat wurde zu der Edelmetallösung gegeben. Der Rückstand getrocknet, geglüht und analysiert.

### 3. Lösen von Pt/Pd-haltigen Rückständen nach alkal. Drucklöseprozeß

### 3.1 Einsatzmaterial

- Rückstand nach alkal. Drucklöseprozeß
   Charge A) mit ca. 3,5 % Pd
   Charge B) mit ca. 2,5 % Pd (beide berechnet aus den Analysewerten)
- Salzsäure, konzentriert, technisch
- Lewoxin 15, technisch, 15 % N₂H₄, p = 1,03 g/cm³
- Ameisenäure, techn. 85 %
- Natriumchloratlösung, techn. 5 mol/l

Pt-haltige und Pt/Ir-haltige Rückstände werden analog bearbeitet.

### 3.2 Versuchsdurchführung und Beobachtungen

### Verwendete Apparatur

Die verwendete Apparatur bestand aus einem 21 Reaktionsgefäß, Rührmotor, Glasrührer, Stabthermometer, Pilzheizhaube und pH- und Redox-Einstabmeßkette (Pt//Ag/AgCl).

### A) HCl/Chlorat-Auszug, Hydrazinreduktion und 2. HCl/Chlorat-Auszug

In dem Versuchsraktor wurden 750 ml 6 n HCl vorgelegt und eine Probe von 225 g Material (Charge A) unter Rühren portionsweise eingetragen. Hierbei war eine Gasentwicklung und ein Schäumen zu beobachten. Nachdem alles Material eingerührt war, hatte sich die Suspension durch die Reaktionswärme auf 75 °C erwärmt. Die Temperatur wurde gehalten und mit Hilfe einer Schlauchpumpe langsam Natriumchloratlösung zugegeben. Nach einer Zugabemenge von 5 ml Natriumchloratlösung war das Redoxpotential von einem Anfangswert von 357 mV auf 1020 mV vs. Pt//Ag/AgCl angestiegen. Es wurde weiter bis zu einer Gesamtmenge von 13 ml Natriumchloratlösung dosiert, wobei eine deutliche Chlorgasentwicklung zu beobachten war. Anschließend wurde noch 30 Minuten bei 75 °C gerührt und die Lösung stehengelassen, bis sie sich auf 40 °C abgekühlt hatte. Nun wurde über einen Schwarzbandfilter abgenutscht und der Rückstand mit 500 ml VEW portionsweise gewaschen. Das Filtrat und das Waschwasser wurden vereinigt (1090 ml) und zur Standard-DCP-Analyse gegeben. Der Rückstand (117,77 g) wurde im Vakuumtrockenschrank 8 Stunden bei 100 °C getrocknet und eine DCP-Analyse veranlaßt.

Die Auswertung der Analysenergebnisse zeigte, daß nur ca. 50 % des Palladiums gelöst wurden. Aus diesem Grund wurde der Rückstand nach dem ersten HCl/Chlorat-Auszug einer Hydrazinreduktion unterworfen.

Eine Menge von 106.87 g des Rückstandes wurden mit 750 ml Wasser aufgeschlämmt, mit konz. Natronlauge ein pH-Wert von 12 eingestellt und unter Rühren auf 70 °C aufgeheizt. Anschließend wurden in 2 ml Portionen insgesamt 12 ml Lewoxin-15-Lösung zugesetzt. Anfangs war ein deutliches Schäumen der Lösung zu beobachten, welches nach 10 ml zugesetztem Lewoxin nachließ. Die Farbe der Suspension änderte sich während der Reduktion von ockerfarben nach dunkelgrau. Die Suspension wurde stehengelassen, bis sie sich auf 40 °C abgekühlt hatte und über einen Schwarzbandfilter abgenutscht. Anschließend wurde der Rückstand mit 500 ml VEW portionsweise gewaschen und trockengesaugt.

Das Filtrat und das Waschwasser wurden vereinigt (1575 ml) und die dunkelgefärbte Lösung zur Standard-DCP-Analyse gegeben.

Der Rückstand der Hydrazinreduktion wurde komplett in den Versuchsreaktor überführt und mit 600 ml 6 n HCl versetzt. Anschließend wurde der Rückstand, wie bereits oben beschrieben, mit 17 ml Natriumchloratlösung ausgezogen. Der Rückstand (95,78 g, hellgrau) wurde abfiltriert, gewaschen und getrocknet und zusammen mit dem Filtrat (1075 ml inkl. Waschwasser) zur Standard-DCP-Analyse gegeben.

Die Ausgangszusammensetzung wurde anhand der Analysenwerte des ersten Chloratauszuges, der Mutterlauge nach Hydrazinreduktion, des zweiten Chloratauszuges und des Inhaltes des Rückstandes nach dem zweiten Chloratauszug berechnet. Es war zu ersehen, daß im ersten Löseschritt ohne Vorreduktion nur 47 % des berechneten Palladiuminhaltes aktiviert werden konnte. Nach entsprechender Reduktion mit Hydrazin konnten nochmals 51 % vom Palladium gelöst werden. Die Mutterlauge nach der Hydrazinreduktion enthielt ca. 1 % vom Palladium, möglicherweise ist ein leichtes Rücklösen des Palladiums durch die langsame Filtration eingetreten. Der Rückstand nach dem zweiten Löseprozeß beinhaltete noch 1 % des Palladiums, so daß 99 % aktiviert werden konnten. Die Chloratauszüge enthielten noch Fe, Pb und Zn in deutlichen Mengen.

### B) Ameisensäurereduktion und HCl/Chlorat-Auszug

In dem Versuchsreaktor wurden 240 ml 0,1 n Salzsäure vorgelegt und eine Menge von 100 g des Ausgangsmaterials portionsweise eingerührt. Anschließend wurde auf Siedetemperatur aufgeheizt und mit Hilfe einer Schlauchpumpe Ameisensäure zudosiert. Nach einer Zugabemenge von 13 ml innerhalb von 15 Minuten war ein Farbübergang von ockerfarben nach dunkelgrau zu beobachten. Die Heizung wurde im Anschluß ausgeschaltet und weitergerührt, bis sich die Suspension auf 80 °C abgekühlt hatte. Es wurde vorsichtig 250 ml konz. Salzsäure zugegeben, wobei eine Gasentwicklung in Kombination mit einer Schaumbildung zu beobachten war. Die Temperatur von 80 °C nach der Säurezugabe wurde gehalten und mit Hilfe einer Schlauchpumpe langsam Natriumchloratlösung zugegeben. Es wurde eine Gesamtmenge von 15 ml Natriumchloratlösung zudosiert, wobei nach 12 ml bereits eine deutliche Chlorgasentwicklung zu beobachten war. Anschließend wurde noch 30 Minuten bei 80 °C gerührt und die Lösung stehengelassen, bis sie sich auf 40 °C abgekühlt hatte.

Nun wurde über einen Schwarzbandfilter abgenutscht und der Rückstand mit 500 ml VEW portionsweise gewaschen. Das Filtrat und das Waschwasser wurden vereinigt (1140 ml) und zur Standard-DCP-Analyse gegeben. Der Rückstand (73,09 g, hellgrau) wurde im Vakuumtrockenschrank 2 Stunden bei 100 °C getrocknet und eine Pd-Bestimmung mittels Dokimasie (bitte erläutern) veranlaßt.

### C) Ameisensäurereduktion und HCl/Chlorat-Auszug

Der Ausgangsgehalt für Palladium wurde aus der Summe des Edelmetallinhaltes der Mutterlauge und des Rückstandes berechnet.

| | | | |
|---|---|---|---|
| Pd | Ausgangsmaterial (Pd berechnet) | Mutterlauge nach Reduktion u. oxid. Lösen | Rückstand nach oxid. Lösen |
| | | | |
| | 100 g, 2,42 % Pd | 1140 ml, 2,107 g/l Pd | 73,09 g, 0,03 % Pd |
| | | | |
| Absolut | 2,424 g Pd | 2,402 g Pd | 0,022 g Pd |
| | | | |
| % | 100 % | 99 % | 1 % |

Die Analysenergebnisse zeigen, daß es gelingt, ca 99 % des Palladiumgehaltes zu lösen.

## Patentansprüche

1. Verfahren zum Lösen von Edelmetallen aus edelmetallhaltigen Scheidgütern, mit:
- bei Vorlage von Edelmetalloxiden Reduktion zu den einzelnen Metallen in feinverteilter Form,
- oxidatives Versetzen der Scheidgüter und/oder der Edelmetalle mit HCI, Suspendieren und anschließende Zugabe von Chlorat, wobei die entstehende Lösung/Suspension eine Konzentration an H⁺-Ionen von mindestens 3 mol/l, eine Konzentration an Cl⁻ Ionen von mindestens 1 mol/l und eine Temperatur von + 50 bis +95°C aufweist.

2. Verfahren nach Anspruch 1, **dadurch gekennzeichnet, dass** die Oxidation potentialgesteuert durchgeführt wird.

3. Verfahren nach einem der Ansprüche 1 oder 2, **dadurch gekennzeichnet, dass** bei Vorlage von Edelmetalloxiden die Reduktion mittels Ameisensäure oder Hydrazin durchgeführt wird.

4. Verfahren nach Anspruch 3, **dadurch gekennzeichnet, dass** bei Reduktion mittels Hydrazin die Edelmetalle hydrazinfrei gewaschen werden.

5. Verfahren nach einem der Ansprüche 1 bis **4**, **dadurch gekennzeichnet, dass** das edelmetallhaltige Scheidgut und/oder die Edelmetalle vor dem oxidativen Versetzen mit HCI und Chlorat in 3 bis 5 molarer Salzsäure suspendiert wird/werden.

6. Verfahren nach einem der Ansprüche 1 bis **5**, **dadurch gekennzeichnet, dass** die Suspension/Lösung des edelmetallhaltigen Scheidguts und/oder der Edelmetalle vor der Chloratzugabe auf + 70° C bis + 80° C erwärmt wird.

7. Verfahren nach einem der Ansprüche 1 bis **6**, **dadurch gekennzeichnet, dass** das Chlorat als wäßrige 4,5 bis 5,0 molare Chloratlösung zugesetzt wird.

## Claims

1. Process for dissolving noble metals from noble metal-containing residues, comprising:
- reduction to the individual metals in finely divided form on initial introduction of noble metal oxides,
- addition of HC1 to the residues and/or the noble metals under oxidizing conditions, suspending and subsequent addition of chlorate, whereby the resulting solution/suspension having a concentration of H⁺ ions of at least 3 mol/1, a concentration of Cl⁻ ions of at least 1 mol/1 and a temperature of +50 to +95°C.

2. Process according to Claim 1, **characterized in that** the oxidation is carried out with potential control.

3. Process according to either of Claims 1 and 2, **characterized in that** the reduction is carried out by means of formic acid or hydrazine on initial introduction of noble metal oxides.

4. Process according to Claim 3, **characterized in that**, in the reduction by means of hydrazine, the noble metals are washed hydrazine-free.

5. Process according to any of Claims 1 to 4, **characterized in that** the noble metal-containing residue and/or the noble metals is/are suspended in 3 to 5 molar hydrochloric acid before the addition of HCl under oxidizing conditions and of chlorate.

6. Process according to any of Claims 1 to 5, **characterized in that** the suspension/solution of the noble metal-containing residue and/or of the noble metals is heated to +70°C to +80°C before the chlorate addition.

7. Process according to any of Claims 1 to 6, **characterized in that** the chlorate is added as an aqueous 4.5 to 5.0 molar chlorate solution.

## Revendications

1. Procédé pour la séparation de métaux précieux à partir de produits de séparation contenant des métaux précieux avec :
- une réduction en les métaux individuels dans une forme finement distribuée lors de la présence d'oxydes de métaux précieux,
- une addition oxydante des produits de séparation et/ou des métaux précieux avec HCI, une mise en suspension et une addition subséquente de chlorate, la solution/suspension produite présentant une concentration en ions H⁺ d'au moins 3 mol/l, une concentration en ions Cl⁻ d'au moins 1 mol/l et une température de +50 à +95°C.

2. Procédé selon la revendication 1, **caractérisé en ce que** l'oxydation est réalisée en étant commandée par le potentiel.

3. Procédé selon l'une quelconque des revendications 1 ou 2, **caractérisé en ce que** la réduction est réalisée, en présence d'oxydes de métaux précieux, à l'aide d'acide formique ou d'hydrazine.

4. Procédé selon la revendication 3, **caractérisé en ce que** les métaux précieux sont, lors de la réduction à l'aide d'hydrazine, lavés jusqu'à ce qu'ils soient exempts d'hydrazine.

5. Procédé selon l'une quelconque des revendications 1 à 4, **caractérisé en ce que** le produit de séparation contenant des métaux précieux et/ou les métaux précieux est/sont mis en suspension dans de l'acide chlorhydrique 3 à 5 molaire avant l'addition oxydante avec HCl et du chlorate.

6. Procédé selon l'une quelconque des revendications 1 à 5, **caractérisé en ce que** la suspension/solution du produit de séparation contenant des métaux précieux et/ou des métaux précieux est réchauffée avant l'addition de chlorate à de +70°C à +80°C.

7. Procédé selon l'une quelconque des revendications 1 à 6, **caractérisé en ce que** le chlorate est ajouté comme solution aqueuse de chlorate 4,5 à 5,0 molaire.
